(19) **Europäisches Patentamt**
**European Patent Office**
**Office européen des brevets**

(11) **EP 3 598 757 A1**

(12) **EUROPEAN PATENT APPLICATION**

(43) Date of publication:
**22.01.2020 Bulletin 2020/04**

(51) Int Cl.:
**H04N 19/593** (2014.01)   **H04N 19/105** (2014.01)
**H04N 19/159** (2014.01)   **H04N 19/176** (2014.01)

(21) Application number: **18305963.3**

(22) Date of filing: **16.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **THOMSON Licensing**
**92130 Issy-les-Moulineaux (FR)**

(72) Inventors:
  • **LELEANNEC, Fabrice**
    **35576 Cesson-Sévigné (FR)**

  • **RACAPE, Fabien**
    **35576 Cesson-Sévigné (FR)**
  • **RATH, Gagan**
    **35576 Cesson-Sévigné (FR)**
  • **URBAN, Fabrice**
    **35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **BLOCK SHAPE ADAPTIVE INTRA PREDICTION DIRECTIONS FOR QUADTREE-BINARY TREE**

(57)    A video encoder or decoder processes portions of video using intra coding and with variable block shapes. Under the general aspects, intra prediction directions are adapted to the block shape or aspect ratio. The general aspects described adaptively replace several conventional angular intra prediction modes with wide-angle intra prediction modes for non-square blocks. The total number of angular directions for any block can remain the same as in prior video coding standards or can be reduced or expanded. To keep the same number of prediction directions, directions along a shorter rectangular edge of a target block are removed but replaced with addition directions along the longer edge of the rectangular target block. For directions with wide angles, reference sample smoothing is performed. Signaling can be provided to inform a corresponding decoder regarding the prediction modes and directions.

Figure 9a

**Description**

FIELD OF THE INVENTION

The present aspects relate to video compression and video encoding and decoding.

BACKGROUND OF THE INVENTION

In the HEVC (High Efficiency Video Coding, ISO/IEC 23008-2, ITU-T H.265) video compression standard, motion compensated temporal prediction is employed to exploit the redundancy that exists between successive pictures of a video.

To do so, a motion vector is associated to each prediction unit (PU). Each Coding Tree Unit (CTU) is represented by a Coding Tree in the compressed domain. This is a quad-tree division of the CTU, where each leaf is called a Coding Unit (CU).

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level.

In the JVET (Joint Video Exploration Team) proposal for a new video compression standard, known as Joint Exploration Model (JEM), it has been proposed to accept a quadtree-binary tree (QTBT) block partitioning structure due to high compression performance. A block in a binary tree (BT) can be split in two equal sized sub-blocks by splitting it either horizontally or vertically in the middle. Consequently, a BT block can have a rectangular shape with unequal width and height unlike the blocks in a QT where the blocks have always square shape with equal height and width. In HEVC, the angular intra prediction directions were defined from 45 degree to -135 degree over a 180 angle, and they have been maintained in JEM, which has made the definition of angular directions independent of the target block shape.

SUMMARY OF THE INVENTION

The drawbacks and disadvantages of the prior art are addressed by the general aspects described herein, which are directed to block shape adaptive intra prediction directions in encoding and decoding.

According to a first aspect, there is provided a method. The method comprises steps for predicting a video sample belonging to a rectangular block based on at least one sample of a neighboring block lying along a direction based on block shape of the rectangular block; and, encoding the rectangular block using intra prediction based on the predicted video sample.

According to another aspect, there is provided a second method. The method comprises steps for predicting a video sample belonging to a rectangular block based on at least one sample of a neighboring reconstructed block lying along a direction based on block shape of the rectangular block; and, decoding the rectangular block using intra prediction based on the predicted video sample.

According to another aspect, there is provided an apparatus. The apparatus comprises a memory and a processor. The processor can be configured to encode a block of a video or decode a bitstream by executing the either of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 shows a square target block with its top and left reference arrays.

Figure 2 shows rectangular target blocks (flat block on the left, tall block on the right) with their top and left reference arrays.

Figure 3 shows rectangular target blocks (flat block on the left, tall block on the right) with their top and left reference arrays

Figure 4 shows attributes of a rectangular block.

Figure 5 shows definition of prediction directions for a rectangular block.

Figure 6 shows top reference array has length 2W+1, left reference array has length 2H+1.

Figure 7 shows blocks having the same block shape, or aspect ratio, have same prediction directions and hence the same modeShift.

Figure 8 shows an example derivation of the angle parameter A for a vertical direction beyond -135 deg.

Figure 9a shows *dirIndex* (shown as dir#) associated with different directions and Figure 9b shows an example of reduced prediction directions.

Figure 10 shows encoder and decoder flow graphs for LUMA blocks in Embodiment 1.

Figure 11 shows encoder and decoder flowgraphs for LUMA blocks in embodiment 2.

Figure 12 shows a generic encoding embodiment to which the present embodiments can be applied.

Figure 13 shows shows a generic decoding embodiment to which the present embodiments can be applied.

Figure 14 shows a block diagram of an exemplary communications channel in which various aspects and exemplary embodiments are implemented.

Figure 15 shows one embodiment of a method for encoding under the general described aspects.

Figure 16 shows one embodiment of a method for decoding under the general described aspects.

Figure 17 shows one embodiment of an apparatus for encoding or decoding under the general described aspects.

DETAILED DESCRIPTION

In the JVET (Joint Video Exploration Team) proposal for a new video compression standard, known as Joint Exploration Model (JEM), it has been proposed to accept a quadtree-binary tree (QTBT) block partitioning structure due to high compression performance. A block in a binary tree (BT) can be split in two equal sized sub-blocks by splitting it either horizontally or vertically in the middle. Consequently, a BT block can have a rectangular shape with unequal width and height unlike the blocks in a Quad Tree (QT) where the blocks have always square shape with equal height and width. In HEVC, the angular intra prediction directions were defined from 45 degree to -135 degree over a 180 angle, and they have been maintained in JEM, which has made the definition of angular directions independent of the target block shape. However, since the idea of partitioning a Coding Tree Unit (CTU) into CUs is to capture objects or parts of objects, and the shape of a block is associated with the directionality of objects, for higher compression efficiency, it is meaningful to adapt the defined prediction directions according to the block shape. In this context, the described general aspects propose to redefine the intra prediction directions for rectangular target blocks.

The general aspects described herein aim at improving the compression performance of conventional video by improving the intra prediction with a QTBT structure. It proposes to adapt intra prediction directions according to the shape of a CU. If the shape of the CU is square, then the already-defined directions in JEM remain unchanged. Otherwise, the searched directions are modified according to the shape of the CU. However, the total number of angular directions for any CU remains unchanged. The aim of adapting the prediction directions to the block shape is to improve the prediction accuracy over the currently defined set of prediction directions, which is independent of block shape.

Furthermore, since the total number of prediction directions for a target CU remains unchanged, the encoding and decoding of the prediction mode using an MPM (Most Probable Mode) set remains unchanged. However, since CUs with different shapes have different defined direction sets, the prediction modes of the neighbor blocks are mapped to the prediction modes of the target block. The mapping is only a re-indexing of the modes, but the actual prediction directions are not changed.

In HEVC (High Efficiency Video Coding, H.265), encoding of a frame of video sequence is based on a quadtree (QT) block partitioning structure. A frame is divided into square coding tree units (CTUs) which all undergo quadtree based splitting to multiple coding units (CUs) based on rate-distortion (RD) criteria. Each CU is either intra-predicted, that is, it is spatially predicted from the causal neighbor CUs, or inter-predicted, that is, it is temporally predicted from reference frames already decoded. In I-slices all CUs are intra-predicted, whereas in P and B slices the CUs can be both intra- or inter-predicted. For intra prediction, HEVC defines 35 prediction modes which includes one planar mode (indexed as mode 0), one DC mode (indexed as mode 1) and 33 angular modes (indexed as modes 2 - 34). The angular modes are associated with prediction directions ranging from 45 degree to -135 degree in the clockwise direction. Since HEVC supports a quadtree (QT) block partitioning structure, all prediction units (PUs) have square shapes. Hence the definition of the prediction angles from 45 degree to -135 degree is justified from the perspective of a PU (Prediction Unit) shape. For a target prediction unit of size NxN pixels, the top reference array and the left reference array are each of size 2N+1 samples, which is required to cover the aforementioned angle range for all target pixels. Considering that the height and width of a PU are of equal length, the equality of lengths of two reference arrays also makes sense.

For the next video coding standard, JVET's attempt as Joint Exploration Model (JEM) proposes to use 65 angular intra prediction modes in addition to the planar and DC modes. However, the prediction directions are defined over the same angular range, that is, from 45 degree to -135 degree in clockwise direction. For a target block of size WXH pixels, the top reference array and the left reference array are each of size (W+H+1) pixels, which is required to cover the afore-mentioned angle range for all target pixels. This definition of the angle in JEM was done more for simplicity than for any other specific reason. However, in doing so, some inefficiency was introduced.

In JEM, it has been proposed to use a quadtree-binary tree (QTBT) block partitioning structure instead of only a quadtree structure due to higher compression performance. Unlike QT blocks, which are always of square shape, BT blocks can be rectangular with unequal width and height due to horizontal or vertical binary splitting. In the current JEM code, the aspect ratio of a rectangular block can vary from 2:1 to 8:1. So, the idea of different angular prediction modes is to capture different object directionalities, and the idea of partitioning a CTU into CUs is to capture objects or parts of objects having such directionalities. Therefore, the shape of a target block is structurally related to the directionality of the object in the block. If the shape of a block is rectangular, certain prediction directions may be more likely to occur than others, Therefore, the definition of prediction directions should not be unrelated to the target block shape, which is the case in JEM.

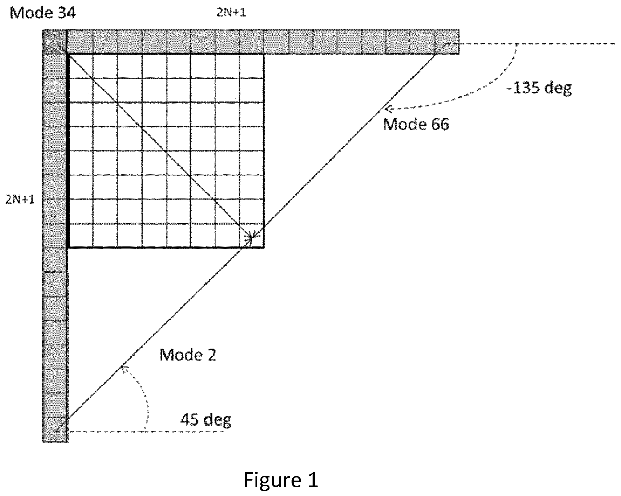

In the case of a square block, there is a structural symmetry. A square block is not only symmetric along both height and width but also it is symmetrically placed with respect to the two reference arrays, as seen in Fig. 1.

Figure 1 shows a square target block with its top and left reference arrays. The target block is symmetrically placed, with respect to the two reference arrays. The prediction directions are defined from 45 deg to -135 deg in clockwise direction where mode 2 corresponds to 45 deg angle and mode 66 corresponds to -135 deg angle.

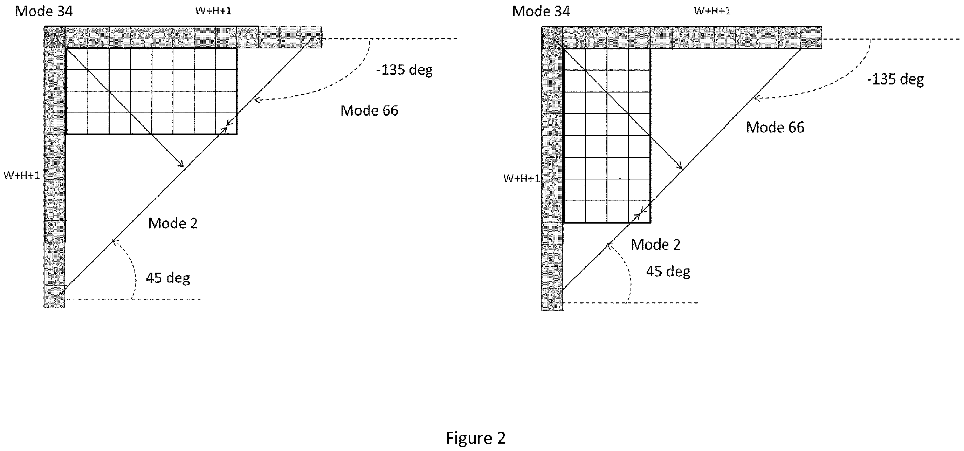

In the case of a rectangular block, this is not so with the current defined directions. When the block is flat (i.e, W > H), it is placed closer to the top reference array, but asymmetrically. Similarly, when the block is tall (i.e., W < H), it is placed closer to the left reference array, but asymmetrically. This asymmetry is shown in Fig. 2.

Figure 2 shows rectangular target blocks (flat block on the left, tall block on the right) with their top and left reference arrays. The target blocks are asymmetrically placed with respect to the two reference arrays.

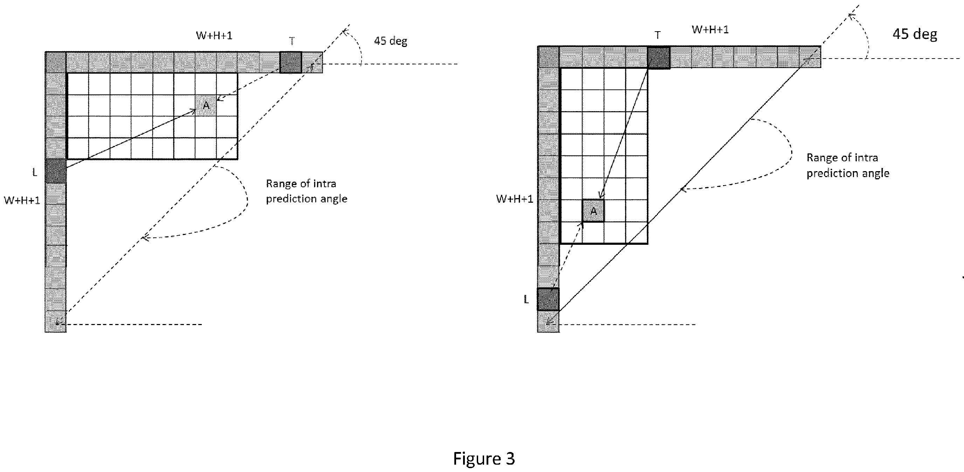

The result of this asymmetry is that for some prediction modes the target pixel will be predicted from a farther reference array whereas the nearer reference array will be excluded because of the defined angles. This is shown in Fig 3.

Figure 3 shows rectangular target blocks (flat block on the left, tall block on the right) with their top and left reference arrays. On the left, the target pixel A has the predictor sample L on the left reference array with a horizontal prediction direction. Though the sample T on the top reference array is nearer, the vertical prediction direction, so that T could be the predictor sample for A, is not allowed in JEM. The right figure shows the analogous case for a target pixel in a tall block.

The flatter or taller a block is (that is, the higher the ratio of the longer side to the shorter side), this asymmetry is more pronounced. Because of the inaccuracy in prediction, such prediction modes become less likely, as seen in actual test results.

Another argument for inefficiency in current defined directions is the equality in number of prediction directions, horizontally and vertically. In JEM, excluding the diagonal mode (mode 34), there are 32 modes in both horizontal and vertical directions. For a square CU, both the height and width being equal, it makes sense to have same number of prediction modes along both horizontal and vertical directions. When the block is rectangular with one side longer than the other, the number of prediction directions in the longer side should be higher simply because of the possibility of higher number of structural directionalities in that side. For a flat block, the ratio of vertical to horizontal mode numbers should be of the order of the ratio of the width to height. Similarly, for a tall block, the ratio of horizontal to vertical mode numbers should be of the order of the ratio of the height to width. A related point to consider is the length of the reference arrays. For a square CU, both height and width being equal, it makes sense to have a same length for the reference arrays. However, for rectangular blocks, intuitively, if the width is greater than height, the top reference array should have more samples than the left one.

Similarly, for blocks with height greater than width, the left reference array should have more samples than the top one. This intuition is based on the fact that a flat (tall) rectangular block has more samples or information along the horizontal (vertical) direction. Likewise, a tall rectangular block has more samples or information along the vertical direction. Therefore, the currently defined directions from 45 deg to -135 degree, which result in equal number of prediction modes in both horizontal and vertical directions, as well as equal lengths of reference arrays, are somewhat inefficient for rectangular blocks.

To solve the above-mentioned issues and to improve the prediction efficiency of rectangular blocks, presented below is a systematic way to define and index the angular prediction modes for various block shapes. Then, in the next section, there will be presented the proposed changes in prediction mode coding to support this mode definition.

In JEM, BT (binary tree) target blocks can have different shapes depending on the lengths of their widths and heights. To define modes that are dependent on a block shape, a generic method is presented below. In this method, the number of prediction modes for any block remains the same as in JEM, but the prediction directions may be different for blocks of different shapes. Besides, a square-shaped block is just a special case having equal height and width, and nothing is changed in this case. In other words, for a square target block, the prediction modes and the associated prediction directions remain unchanged.

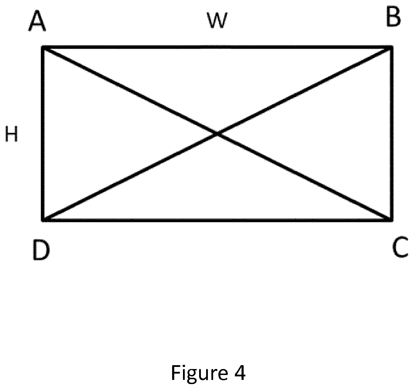

A rectangle is defined by its width W, and height H, as shown in Fig. 4. If A, B, C, and D denote its four vertices, as shown in the figure, then AC is its principal diagonal and BD is its secondary diagonal. A square is a special rectangle when W = H. Figure 4 shows attributes of a rectangular block.

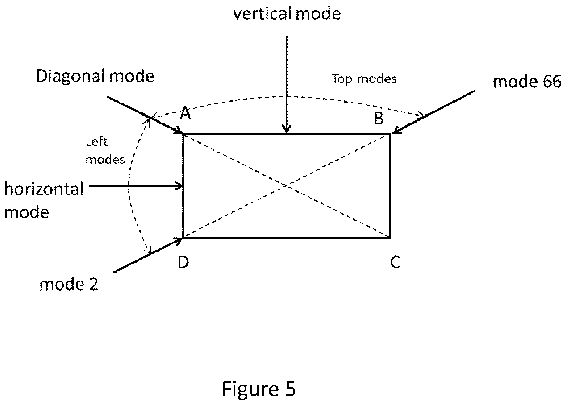

For any target block of width W and height H, mode 2 will be associated with the direction from vertex D towards vertex B, mode 66 with the direction from vertex B towards vertex D, along the secondary diagonal, as shown in Fig. 5. The diagonal mode is associated with the direction from vertex A towards vertex C along the principal diagonal. All modes from mode 2 up to the diagonal mode will be termed Left modes. Similarly, all modes from the diagonal mode to mode 66, including the diagonal mode, will be termed Top modes. Left modes are associated with horizontal directions. Similarly, Top modes are associated with vertical directions. The *horizontal mode,* or purely horizontal mode, is a Left mode that corresponds to the zero-degree angle. The *vertical mode,* or purely vertical mode, is a Top mode that corresponds to a -90-degree angle.

Figure 5 shows a definition of prediction directions for a rectangular block. Mode 2 is along the secondary diagonal from vertex D towards vertex B. Mode 66 is along the opposite direction to mode 2. Diagonal mode is along the principal diagonal from vertex A towards vertex C.

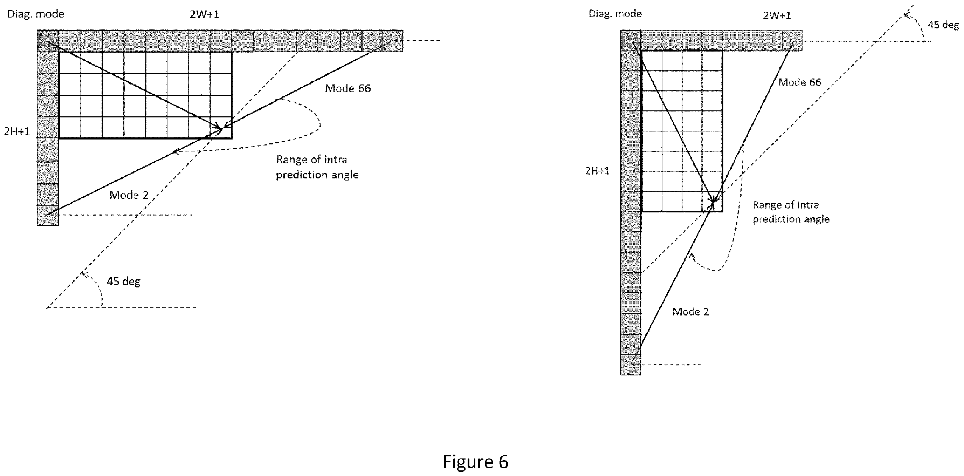

Figure 6 shows a top reference array has length 2W+1, left reference array has length 2H+1. The width W and the height H are the dimensions of the white blocks in Figure 6.

To support these prediction directions, the top reference with length 2W+1, and the left reference with length 2H+1, are defined as shown in Fig. 6. In the case of a square block, the figure will be identical to that in Fig. 1, where W = H = N.

Notice that, for a flat block, the length of the top reference is larger than that of the left reference array. So are the number of Top modes compared to the Left modes. Similarly, for a tall block, the converse is true. The length of the left reference is larger than that of the top reference array in that case.

Moreover, the location of the block is symmetric with respect to the reference arrays. When the target block is a square, there is perfect symmetry, and the prediction directions and the lengths of reference arrays match the JEM definitions exactly, as in Fig. 1.

The beauty of the above definition is the adaptivity of the prediction directions with the block shape. Notice that, here, the modes 2 and 66 are not defined to correspond to directions along a 45-degree angle and a -135-degree angle, rather the directions along the secondary diagonal. In the case of a flat block, some directions near, and including, 45-degree are removed, but an equal number of directions are added exactly in the opposite directions beyond -135-degree angle. Similarly, in the case of a tall block, some directions near, and including, a -135-degree are removed, but an equal number of directions are added exactly in the opposite directions beyond a 45-degree angle. We will refer to the offset of the mode 2 from 45-degree angle as "modeShift", which is defined as the number of modes removed (between mode 2 and 45-degree angle), or equivalently, the number of modes added (between angle -135-degrees and mode 66). Flat blocks have a positive modeShift whereas tall blocks will have a negative modeShift. For a square block, the modeShift is equal to 0.

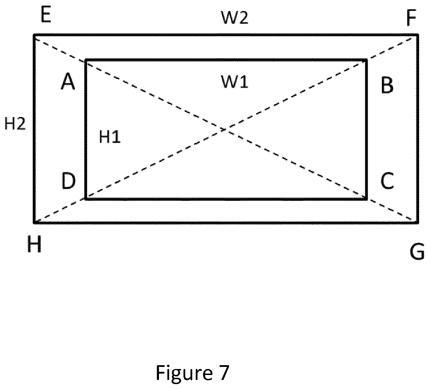

The modeShift of a block represents the offset of its starting mode (that is Mode 2) with respect to the starting mode of a square block. Clearly, it is a function of the shape of the block. The important observation to make is that the modeShift of a block does not depend on the absolute values of its width and height, but rather depends on their ratio. This is illustrated in Fig. 7. Rectangle ABCD (width W1 and height H1) and rectangle EFGH (width W2 and height H2) have the same prediction directions (hence, the same modeShift). Using the similarity of triangles, it can be shown that W1/W2 = H1/H2. Therefore W1/H1 = W2/H2. Therefore, the blocks having the same ratio of width-to-height (or vice versa) will have the same prediction modes in both horizontal and vertical directions.

Figure 7 shows blocks having the same aspect ratio (the ratio of width-to-height) have same prediction directions and hence the same modeShift.

The mode number (2-66) is only an index or label for a prediction direction. The corresponding direction is specified by the angle parameter A in HEVC and JEM. The values of A for different prediction modes in JEM are shown in Table 1.

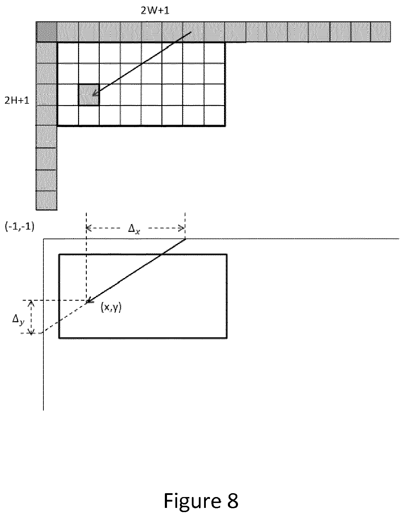

The angle parameters for the directions which are introduced beyond 45-degree or -135-degree angles can be easily derived from the angle parameter of the opposite directions. Consider Figure 8, where a target pixel is vertically predicted along a prediction direction beyond -135-deg angle. Let W and H denote the width and height of the block. Denote the coordinate of the target pixel as (x,y) where 0 <= x <W and 0<=y<H. The horizontal displacement of the predictor sample on the top reference array from the target sample is given by $\Delta_x$. If the prediction direction is extended to intersect the left reference array, the vertical displacement of the intersecting point from the target sample is given as $\Delta_y$.

Figure 8 is an example of deriving the angle parameter A for a vertical direction beyond - 135 degrees. $\Delta_x$ is the horizontal displacement of the predictor for a target pixel at (x,y). If the prediction were in the opposite direction (which is horizontal), the predictor would have vertical displacement $\Delta_y$.

Using the similarity of triangles results in:

$$\frac{\Delta_x}{((1+x) \ll 5) + \Delta_x} = \frac{(1+y) \ll 5}{((1+y) \ll 5) + \Delta_y}$$

| Mode index | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|
| A | 32 | 29 | 26 | 23 | 21 | 19 | 17 | 15 | 13 | 11 | 9 | 7 | 5 | 3 | 2 | 1 |
| Mode index | 18 | 19 | 20 | 21 | 22 | 23 | 24 | 25 | 26 | 27 | 28 | 29 | 30 | 31 | 32 | 33 |
| A | 0 | -1 | -2 | -3 | -5 | -7 | -9 | -11 | -13 | -15 | -17 | -19 | -21 | -23 | -26 | -29 |

| Vertical directions | | | | | | | | | | | | | | | | |
|---|---|---|---|---|---|---|---|---|---|---|---|---|---|---|---|---|
| Mode index | 34 | 35 | 36 | 37 | 38 | 39 | 40 | 41 | 42 | 43 | 44 | 45 | 46 | 47 | 48 | 49 | 50 |
| A | -32 | -29 | -26 | -23 | -21 | -19 | -17 | -15 | -13 | -11 | -9 | -7 | -5 | -3 | -2 | -1 | 0 |

| Mode index | 51 | 52 | 53 | 54 | 55 | 56 | 57 | 58 | 59 | 60 | 61 | 62 | 63 | 64 | 65 | 66 | |
|---|---|---|---|---|---|---|---|---|---|---|---|---|---|---|---|---|---|
| A | 1 | 2 | 3 | 5 | 7 | 9 | 11 | 13 | 15 | 17 | 19 | 21 | 23 | 26 | 29 | 32 | |

Table 1: Angle parameter A defined in JEM

Table 2: Angle parameter of opposite angles corresponding to positive A values.

| A | 1 | 2 | 3 | 5 | 7 | 9 | 11 | 13 | 15 | 17 | 19 | 21 | 23 | 26 | 29 | 32 |
|---|---|---|---|---|---|---|---|---|---|---|---|---|---|---|---|---|
| $A_n$ | 1024 | 512 | 341 | 205 | 146 | 114 | 93 | 79 | 68 | 60 | 54 | 49 | 45 | 39 | 35 | 32 |

As used in JEM, here the calculation has used the fact that the distance between two nearest samples is (1<<5) using (1/32) sample resolution. Simplifying this results in:

$$\Delta_x \Delta_y = ((1 + x)(1 + y) \ll 10)$$

The prediction angle is opposite to the horizontal direction having $\Delta_y = (1 + x)A$ where $A$ denotes the value of the angle parameter for the horizontal direction. Substituting in the above equation, results in:

$$\Delta_x A = ((1 + y) \ll 10),$$

or,

$$\Delta_x = (1 + y)\frac{(1 \ll 10)}{A}.$$

Therefore, the angle parameter for the vertical direction is given as

$$A_n = \frac{1 \ll 10}{A}$$

where A is the angle parameter of the opposite direction. Since A has only integral values, the above expression may result in fractional values for $A_n$. Therefore, rounding the value to the nearest integer:

$$A_n = round(\frac{1 \ll 10}{A})$$

The same expression would be obtained if we had considered a horizontal direction beyond a 45-degree angle.
In that case, A would denote the angle parameter of the opposite vertical direction. Note that, irrespective of the BT block shape, if the block is rectangular, the newly introduced directions are exactly opposite to the directions removed (within the rounding). Therefore, the A parameter of the removed directions can be used to compute the A parameter of the newly introduced opposite direction. Both the removed directions and the newly introduced ones are always positive (either positive horizontal or positive vertical). Hence, they have positive $A$ parameter values. Table 2 lists the positive A values in JEM, and the corresponding values of $A_n$ as computed above.
Using values from Table 2, the angle parameters for different flat block shapes are given below. The angle parameters for tall blocks can be derived in an analogous manner but are not shown here. Before specifying the tables, there are two points to note. First, as seen in the above table, JEM specifies the angles for discrete angular directions. Hence, the starting and ending directions might not be matching exactly with the secondary diagonal. Similarly, one direction might not be matching exactly with the diagonal direction. In this case, without changing the specified directions in JEM, the proposed method will take the nearest directions for this purpose. Secondly, in JEM, for a BT block, the ratio of the length of the larger side to the smaller side can have values 1, 2, 4, and 8 only. When the ratio equals 1, it is a square block, and in this case, the directions remain unchanged. Therefore, in the following are presented the A values for blocks vis-à-vis the mode number with W/H (width/height) equal to 2, 4, and 8 only. As the W/H value is increased, the number of horizontal directions is decreased, and the number of vertical directions is increased. Therefore, for W/H equal to 4, reuse the vertical directions from W/H equal 2, and for W/H equal to 8, reuse the vertical directions for W/H equal to 4. These are shown in bold typeface in tables. As per the convention, the diagonal mode in the vertical directions is included.

**Case 1: W/H = 2**

    modeShift = 6
    No. of horizontal directions (Left modes) = 20

No. of vertical directions (Top modes) = 2 * 6 + 33 = 45

Note that, in Table 3, the directions corresponding to modes 22-27 were already defined in JEM, where they were horizontal directions. Here they are grouped in vertical directions since the diagonal direction now corresponds to mode 22. The A parameter values had to be recalculated in terms of displacements along the top edge of the block.

**Case 2: W/H = 4**

modeShift : 10
No. of horizontal directions (Left modes) = 12
No. of vertical directions (Top modes) = 2 * 4 + 45 = 53

| Horizontal directions | | | | | | | | | | | | | | | | |
|---|---|---|---|---|---|---|---|---|---|---|---|---|---|---|---|---|
| Mode index | 2 | 3 | 4 | 5 | 6 | 7 | 8 | 9 | 10 | 11 | 12 | 13 | 14 | 15 | 16 | 17 |
| A | 17 | 15 | 13 | 11 | 9 | 7 | 5 | 3 | 2 | 1 | 0 | -1 | -2 | -3 | -5 | -7 |
| Mode index | 18 | 19 | 20 | 21 | | | | | | | | | | | | |
| A | -9 | -11 | -13 | -15 | | | | | | | | | | | | |

| Vertical directions | | | | | | | | | | | | | |
|---|---|---|---|---|---|---|---|---|---|---|---|---|---|
| Mode index | 22 | 23 | 24 | 25 | 26 | 27 | 28:60 | 61 | 62 | 63 | 64 | 65 | 66 |
| A | -60 | -54 | -49 | -45 | -39 | -35 | **-32:32** from Table 1. | 35 | 39 | 45 | 49 | 54 | 60 |

Table 3: Angle parameter A for flat blocks with W/H equal to 2.

| Horizontal directions | | | | | | | | | | | | |
|---|---|---|---|---|---|---|---|---|---|---|---|---|
| Mode index | 2 | 3 | 4 | 5 | 6 | 7 | 8 | 9 | 10 | 11 | 12 | 13 |
| A | 9 | 7 | 5 | 3 | 2 | 1 | 0 | -1 | -2 | -3 | -5 | -7 |

| Vertical directions | | | | | | | | |
|---|---|---|---|---|---|---|---|---|
| Mode index | 14 | 15 | 16 | 17 | 18:62 | 63 | 64 | 65 | 66 |
| A | -114 | -93 | -79 | -68 | **-60:60** from Table 3 | 68 | 79 | 93 | 114 |

Table 4: Angle parameter A for flat blocks with W/H equal to 4.

Note that, in Table 4, the directions corresponding to modes 14-17 were already defined in JEM, where they were horizontal directions. Here, they have been grouped in vertical directions since the diagonal direction now corresponds to mode 14.

**Case 3: W/H = 8**

    modeShift :12
    No. of horizontal directions (Left modes) = 8
    No. of vertical directions (Top modes) = 2 * 2 + 53 = 57

Note that, in Table 5, the directions corresponding to modes 10-11 were already defined in JEM, where they were horizontal directions. Here, they have been grouped in vertical directions since the diagonal direction now corresponds to mode 10.

As we see in the table, the mode index will always vary between 2-66 irrespective of block shape. However, for different blocks, the same mode index may correspond with different prediction directions. Therefore, to distinguish between them, it is proposed here to introduce a parameter called *dirIndex* which is defined as:

$$dirIndex = modeIndex + modeShift - 2 \ldots\ldots\ldots (1)$$

The *dirIndex* will correspond to only one prediction direction and vice versa. Table 6 shows the range of *dirIndex* for different target block shapes along with the modeShift values.

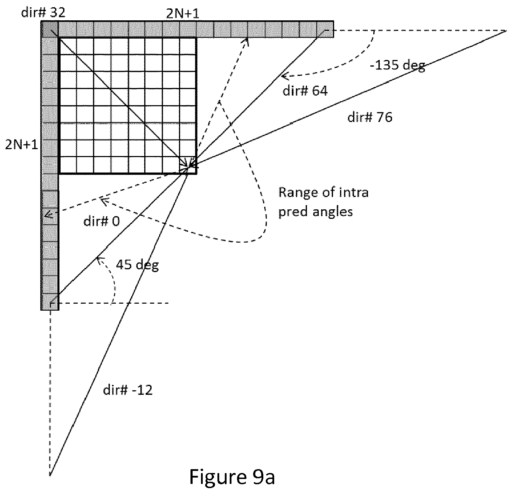

Figure 9a shows the prediction directions designated with the direction Indices (as dir#). There are 89 possible prediction directions in total spanning an angle greater than 180 degrees. Though the total number of directions is greater than 65, for any given target block, only 65 adjacent directions are checked for prediction. These 65 directions span 180 degrees along a line. The directions are adapted with the target block size, to check more or less number of directions in vertical or horizontal directions.

In the JEM definition of prediction directions, there is only one pair of directions (dir # 0 and dir# 64) where the directions are exactly opposite to each other. Notice that, now, there are a range of direction pairs which are exactly opposite. For any direction with

| Horizontal directions | | | | | | | | |
|---|---|---|---|---|---|---|---|---|
| Mode index | 2 | 3 | 4 | 5 | 6 | 7 | 8 | 9 |
| A | 5 | 3 | 2 | 1 | 0 | -1 | -2 | -3 |

| Vertical directions | | | | | |
|---|---|---|---|---|---|
| Mode index | 10 | 11 | 12:64 | 65 | 66 |
| A | -205 | -146 | **-114:114** from Table 4 | 146 | 205 |

Table 5: Angle parameter A for flat blocks with W/H equal to 8.

Table 6: modeShift and *dirIndex* for different block shapes

| W/H | Range of *dirIndex* | modeShift |
|---|---|---|
| 1 | 0-64 | 0 |
| 2 | 6 - 70 | 6 |
| 4 | 10-74 | 10 |
| 8 | 12 - 76 | 12 |
| 1/2 | -6 : 58 | -6 |
| 1/4 | -10: 54 | -10 |
| 1/8 | -12:52 | -12 |

index smaller than or equal to 0, or greater than or equal to 64, the opposite direction is included in the set of all possible directions. However, for any given target block, only the directions corresponding to mode 2 and mode 66 are opposite. The directions with *dirIndex* smaller than, or equal to, 0 correspond to the positive horizontal directions beyond 45-degree angle, which have positive A values. Similarly, the directions with *dirIndex* greater than, or equal to, 64 correspond to positive vertical directions beyond -135-degree angle, which have positive A values.

Figure 9a shows *dirIndex* (shown as dir#) associated with different directions. For square blocks, the *dirIndex* varies from 0 to 64 corresponding to the 65 directions defined from 45 deg to -135 deg. For flat blocks, depending on the shape, *dirIndex* is greater than 64 for some vertical directions. Similarly, for tall blocks, depending on the shape, *dirIndex* is smaller than 0 for some horizontal directions.

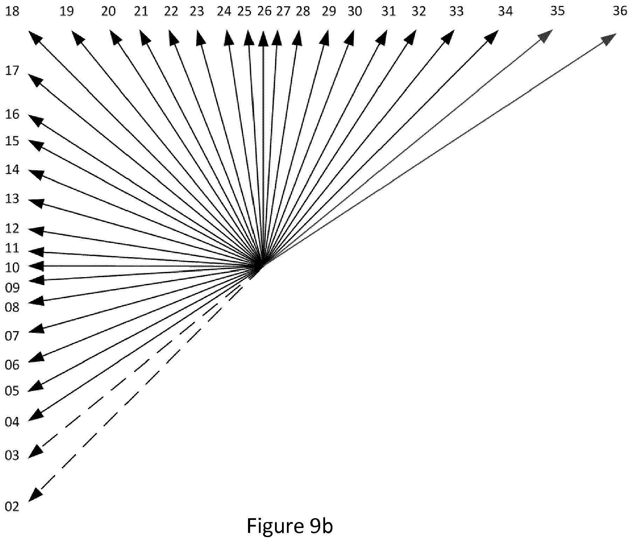

The number of directions can also be limited, or expanded, beyond the number presented above. Consider the hypothetical case of 33 HEVC directions in Figure 9b and limiting the operation to two modes closest to the diagonal modes. In this case, if the block width is larger than its height, mode 2 and mode 3 would be removed horizontal modes. In addition, mode 3 and mode 4 would have extra flags indicating whether to use the conventional mode or flipped wide angular directions with newly created mode 35 and mode 36, the new vertical modes accounting for new prediction directions.

To encode the prediction mode for luminance, the concept of most probable mode (MPM) is maintained in JVET. Using the prediction modes of causal neighbor blocks (if they are available and intra-predicted), planar and DC prediction modes, and some fixed angular modes such as directly vertical, directly horizontal, mode 2, mode 66 and mode 34, an MPM set of 6 modes is constructed. The remaining prediction modes are partitioned into a selected set of 16 modes and a set of 45 remaining modes. If the prediction mode of the target block belongs to the MPM set, it is encoded with the index of the member MPM. If it belongs to the selected set, it is encoded with 4 bits. Otherwise it is encoded with a truncated binary code.

The proposed modification of prediction directions for rectangular BT blocks maintains the same coding scheme as in JEM with some changes. The causal neighbors of the target block can have different shapes. Therefore, they may have different prediction direction ranges. Furthermore, they may have same prediction modes even though those are associated with different prediction directions. This will pose a problem in the construction of the MPM set. Therefore, in the first step, the prediction modes of the neighbor blocks are mapped to the prediction mode of the target block through the prediction direction index (*dirIndex*).

Secondly, for a given target block, the *dirIndex* can have only 65 adjacent directions plus PLANAR and DC modes. If the prediction mode of the neighbor block is 0 (PLANAR) or 1 (DC), there is no mapping to be done, and the modes are checked for inclusion in the MPM set. If the mode is greater than 1, the mode is mapped to the corresponding direction index. If the direction index belongs to the range of 65 directions for the target block, then the corresponding mode number for the target block is checked for inclusion in the MPM set. Otherwise, the mode corresponding to the opposite direction is checked for inclusion in the MPM set. Note that, if a direction does not belong to the target block's direction set, its opposite must belong to the set.

The mapping of the mode to a direction is done using Equation 1. Then, given the direction, the mapping to the mode of the target block is done using the following equation:

$$modeIndex = dirIndex - modeShift + 2 \ldots\ldots\ldots (2)$$

where the modeShift of the target block is used. Using the *dirIndex* from Equation 1, results in:

$$modeIndex_{TB} = modeIndex_{NB} + modeShift_{NB} - modeShift_{TB}, \ldots (3)$$

where the subscripts TB and NB are used to indicate the target block and the neighbor block, respectively. If the resulting $modeIndex_{TB}$ is less than 2 or greater than 66, it implies that the direction associated with the neighbor block's mode does not belong to the set of prediction directions for the target block. In this case, the opposite direction is used. If $modeIndex_{TB} < 2$, add 64 to it, or if $modeIndex_{TB} > 66$, subtract 64 from it. The resulting mode is associated with the opposite direction.

Two examples to clarify the above mapping are shown below.

**Example 1:** The target block has W = 8 and H = 8. Its left neighbor has W = 8 and H = 4, and prediction mode m = 2.

Since W/H = 2, the modeShift for the left neighbor is 6. The target block is a square and its modeShift is 0. Thus, the new modeIndex is obtained as m = 2 + 6 - 0 = 8.

**Example 2:** The target block has W = 4 and H = 32. Its left neighbor has W = 16 and H = 4, and prediction mode m = 8.

Since W/H = 16/4=4, the modeShift for the left neighbor is 10. For the target block, W/H = 4/32 = 1/8. Its modeShift is -12 and the direction indices range from -12 to 52. Thus, the new modeIndex is obtained as m = 8 + 10 - (-12) = 30.

The rest of the mode coding process remains unchanged. Apart from the six modes in the MPM set, the remaining modes are divided into a selected set of 16 modes and a set consisting of the remaining 45 modes.

Note that, even if the target block is a square, the mapping is necessary for constructing the MPM set with the prediction modes of neighbor blocks, which may not be all square.

It is to note that even if the number of MPMs is changed, as long as the prediction modes of the neighbors are mapped to the prediction mode set of the target block, the employed prediction mode coding algorithm will remain unchanged.

For the Chroma CUs, at least one embodiment also does the same remapping of prediction modes to obtain the direct modes in the case where Luma and Chroma component trees are separate (i.e. in I-slices). The prediction modes of collocated and neighbor Luma CUs, can be remapped to the modes of the target Chroma block.

Based on the proposed direction definition, several embodiments are presented as possible implementation options. These can be implemented in JEM, for example.

In a first exemplary embodiment, called Embodiment 1, the angular prediction directions for target blocks are modified as presented earlier. If the target block is a square, there is no change in the prediction directions. Else, if the target block is rectangular, the prediction modes are associated with defined directions depending on the aspect ratio of the block. The encoder performs the best prediction mode search in the usual manner with RD (rate distortion) optimization except that, for modes 2 to 66, the associated prediction directions depend on the block shape.

For Luma target blocks, the encoder encodes the prediction mode using an MPM set where the MPM set is constructed with mapping of the neighbor blocks' prediction modes, as explained in the previous section. For Chroma target blocks, it derives the direct modes by mapping the prediction modes of collocated and neighbor Luma blocks. This mapping is not necessary for blocks in Inter coded slices where the Luma and Chroma components have the same coding tree structure.

The decoder, for Luma target blocks, decodes the prediction mode with an MPM set, which it constructs in the same manner that the encoder does. For Chroma target blocks, it derives the direct modes after mapping the prediction modes of collocated and neighbor Luma blocks exactly in the same manner as the encoder does. It constructs the prediction for the target block in the usual manner except that, for modes 2 to 66, the associated prediction directions depend on the block shape.

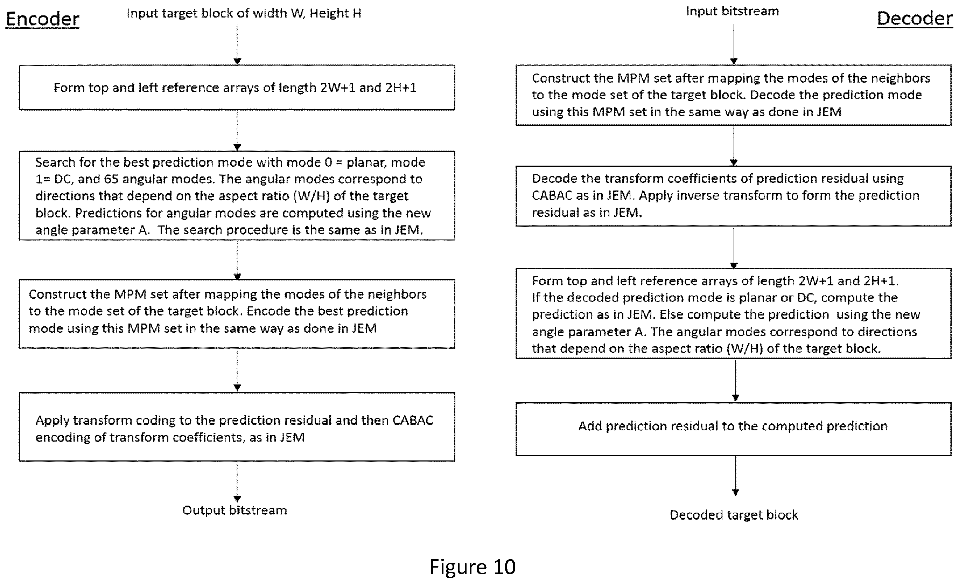

Figure 10 shows an encoder and decoder flow diagram for the Luma blocks in Embodiment 1.

In Embodiment 2, Embodiment 1 is augmented as far as the prediction directions are concerned. For any target block, the prediction directions are defined as the union of the set of directions defined in JEM, (i.e., 65 directions from 45 deg to -135 deg in clockwise direction) and the set of directions defined in this proposal, which depends on the target block shape. Since the set of defined directions for any target block consists of a subset of the JEM directions and some newly introduced directions, the union of the two sets will consist of the set of 65 JEM directions plus the newly introduced directions depending on the block shape. The newly introduced directions are opposite of some of the positive directions in JEM direction set (which had been removed in the proposal). A flag of 1-bit, called *modeFlag,* is used to distinguish between these opposite pair of directions, the numbers of which vary depending on the block shape. Since the JEM directions are included, this embodiment also keeps the mode indexing the same as in JEM. That is, mode 2 will correspond to the 45-degree angle and mode 66 will correspond to the -135-degree angle. The modes also having opposite directions (except mode 2 and mode 66) will have their *modeFlag* value equal to 0. The opposite directions will use the same mode number but with the *modeFlag* value equal to 1. That is, the pair of opposite directions will be associated with the same mode number, but with the *modeFlag* equal to 0 and 1, respectively.

The prediction mode encoding remains the same as in JEM. However, for the modes with opposite directions (except mode 2 and 66), the *modeFlag* is encoded with a fixed, mode-dependent, or neighbor-dependent context.

Note that, since the set of directions is an augmented set, the lengths of the top and left reference arrays also change. The length of the top reference array is H+W+1 or 2W+1, whichever is greater. Similarly, the length of the left reference array is H+W+1 or 2H+1, whichever is greater. This means that, for flat blocks, the top reference array will have 2W+1 samples and the left reference array will have H+W+1 samples. Similarly, for tall blocks, the top reference array will have H+W+1 samples and the left reference array will have 2H+1 samples. If the block is square, both the top and left reference arrays will have H + W +1 (= 2H+1 = 2W+1, since W=H) samples, as in JEM.

At the decoder side, the prediction mode is decoded using the usual MPM based method. If the mode belongs to the set of directions which have opposite directions, the *modeFlag* value is also decoded. If the prediction mode is planar or DC, the decoder will compute the prediction as in JEM. Else, if the *modeFlag* has not been decoded, or if it has been decoded and its value is zero, then the decoder constructs the prediction in the corresponding direction as in JEM. Else, the decoder constructs the prediction in the opposite direction to the one associated with the decoded mode, with the new angle parameter A.

For the Chroma target blocks, the direct modes are computed in the same manner as in JEM irrespective of the *modeFlag* value (if the mode has an opposite direction) for the corresponding Luma blocks. Depending on the target block aspect ratio, if any direct mode has an opposite direction, then the encoder, while searching for the best prediction mode, also includes the opposite direction in the search. If such a mode is finally determined to be the best mode, the *modeFlag* of one bit is encoded depending on the best direction. At the decoder, the derivation of the direct modes, the decoding of prediction mode, and *modeFlag* (in case the mode has an opposite direction), is exactly the same as in the encoder.

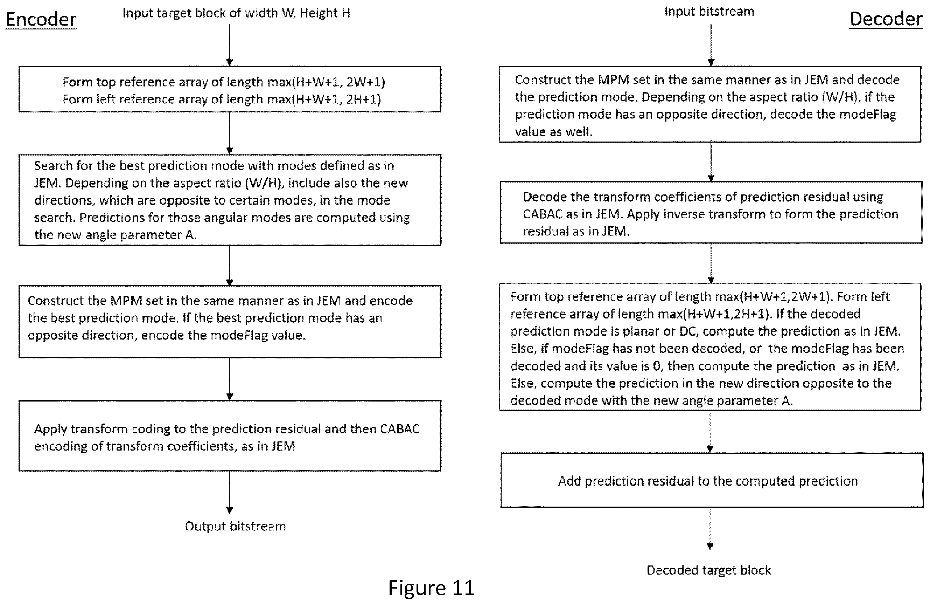

The encoder and decoder flowgraphs for Luma blocks are shown in Figure 11.

In a third exemplary embodiment, called Embodiment 3, the changes described in Embodiment 1 or Embodiment 2 are applied only when the relevant reference samples are available. For example, in the case of a flat block, this invention extends the directions after - 135°. However, independent of the current block shape, top right neighboring blocks may not be available. In that case, the target block will be predicted as in JEM, that is, using the 65 angular directions spanning from 45 degree to -135 degree in clock-wise direction. As both encoder and decoder can easily detect the presence of reconstructed neighboring blocks, they will decide, in a corresponding manner, whether to apply the extended directions.

In a fourth embodiment, Embodiment 4, all target blocks in a slice are predicted as in Embodiment 1 through Embodiment 3 and this is signaled to the decoder using a one bit flag in the slice header.

In a fifth embodiment, Embodiment 5, all target blocks in a frame are predicted as in Embodiment 1 through Embodiment 3 and this is signaled to the decoder using a one-bit flag in the Picture Parameter Set (PPS) header.

In a sixth embodiment, Embodiment 6, all target blocks in any frame of a sequence are predicted as in Embodiment 1 through Embodiment 3 and this is signaled to the decoder using a one-bit flag in the Sequence Parameter Set (SPS) header.

One advantage of the proposed embodiments is that they adapt the prediction directions for a rectangular block to the block shape. One aim is to improve the compression performance without increasing the complexity.

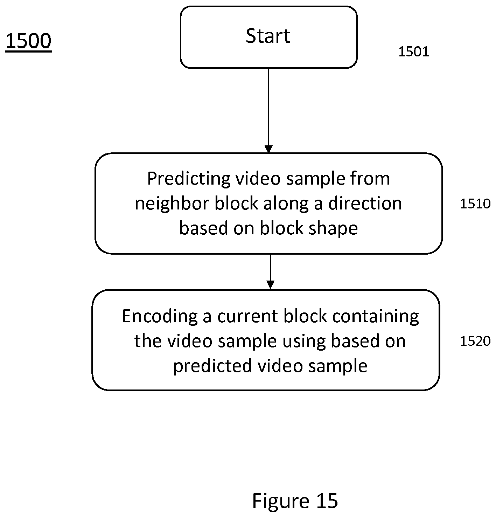

Figure 15 shows one embodiment of a method 1500 for intra prediction with adaptive block sizes in an encoder. The method commences at Start block 1501 and control proceeds to block 1510 for predicting a video sample belonging to a rectangular block based on at least one sample of a neighboring block lying along a direction based on an aspect ratio of the rectangular block. Control proceeds from block 1510 to block 1520 for encoding the rectangular block using intra prediction based on the predicted video sample.

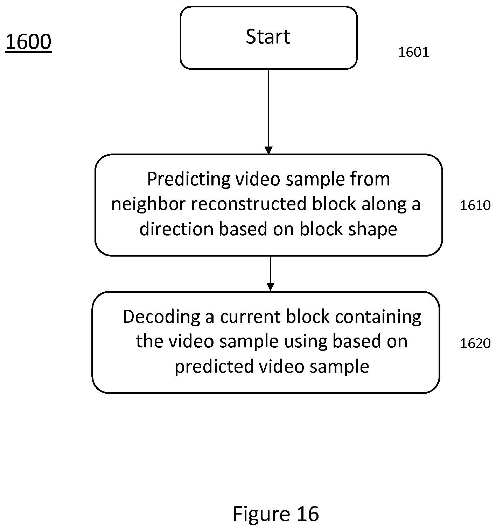

Figure 16 shows one embodiment of a method 1600 for intra prediction with adaptive block sizes in an encoder. The method commences at Start block 1601 and control proceeds to block 1610 for predicting a video sample belonging to a rectangular block based on at least one sample of a neighboring reconstructed block lying along a direction based on an aspect ratio of the rectangular block. Control proceeds from block 1610 to block 1620 for decoding the rectangular block using intra prediction based on the predicted video sample.

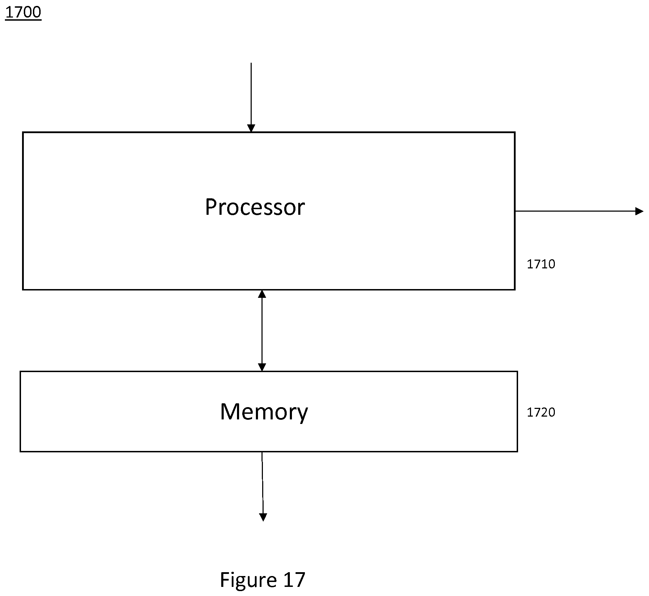

Figure 17 shows one embodiment of an apparatus 1700 for encoding or decoding a video block using intra prediction with adaptive block sizes. The apparatus comprises Processor 1710 having one or more input and output ports and is interconnected through one or more communication ports to Memory 1720. Apparatus 1700 is capable of performing either of the methods of Figure 15 or Figure 16 or any variant.

This document describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

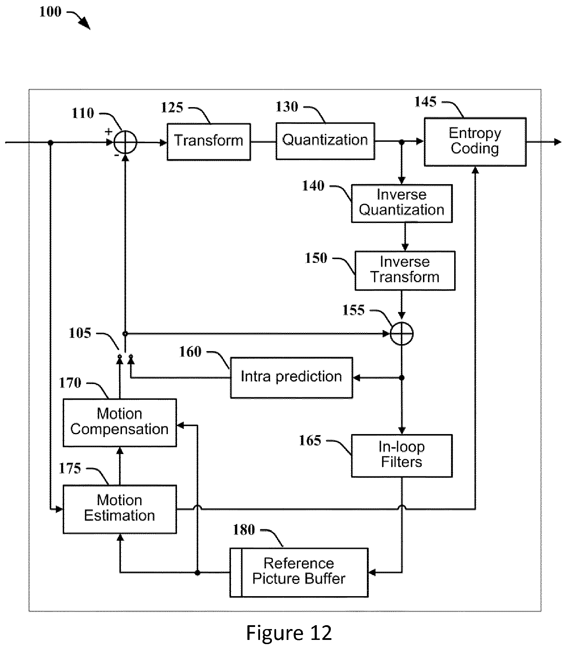

The aspects described and contemplated in this document can be implemented in many different forms. FIGs. 12, 13 and 14 provide some embodiments, but other embodiments are contemplated and the discussion of FIGs. 12, 13 and 14 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described above, and each of the methods comprises one or more steps or actions for achieving the described method. Unless a specific order of steps or actions is required for proper operation of the method, the order and/or use of specific steps and/or actions may be modified or combined.

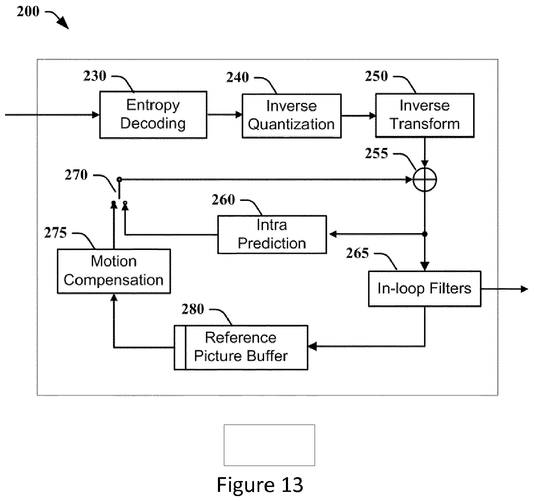

Various methods and other aspects described in this document can be used to modify modules, such as, for example, the motion compensation 170 and motion estimation 175 of Figure 12 and motion estimation 275 of Figure 13. Moreover, the present aspects are not limited to JVET or HEVC, and can be applied, for example, to other standards and recommendations, whether pre-existing or future-developed, and extensions of any such standards and recommendations (including JVET and HEVC). Unless indicated otherwise, or technically precluded, the aspects described in this document can be used individually or in combination.

Various numeric values may be shown in the present document. The specific values are for exemplary purposes and the aspects described are not limited to these specific values.

Figure 12 illustrates an exemplary encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components to get a signal distribution more resilient to compression (for instance using a histogram equalization of one of the color components). Metadata can be associated with the pre-processing and attached to the bitstream.

**EP 3 598 757 A1**

In the exemplary encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 13 illustrates a block diagram of an exemplary video decoder 200. In the exemplary decoder 200, a bitstream is decoded by the decoder elements as described below. Video decoder 200 generally performs a decoding pass reciprocal to the encoding pass as described in FIG. 12. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

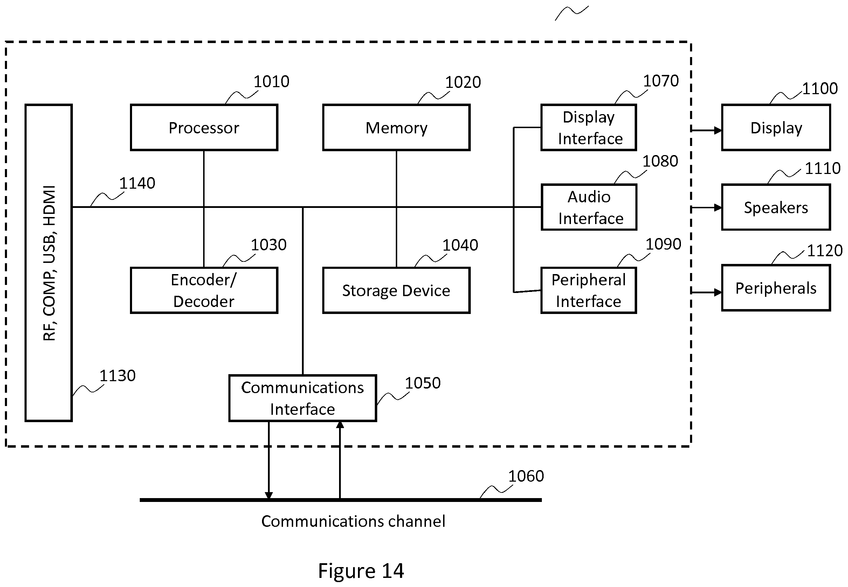

FIG. 14 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit, multiple ICs, and/or discrete components. For example, in at least one embodiment, the processing and encoder/decoder elements of system 1000 are distributed across multiple ICs and/or discrete components. In various embodiments, the system 1000 is communicatively coupled to other systems, or to other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010. Similarly, aspects of USB or HDMI interface processing can be implemented within separate interface ICs or within processor 1010. The demodulated, error corrected, and demultiplexed stream is provided to various processing elements, including, for example, processor 1010, and encoder/decoder 1030 operating in combination with the memory and storage elements to process the datastream for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a wireless network such as IEEE 802.11. The wireless signal of these embodiments is received over the communications channel 1060 and the communications interface 1050 which are adapted for wireless communications, such as Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device, for example, a television. In various embodiments, the display interface 1070 includes a display driver, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The exemplary embodiments can be carried out by computer software implemented by the processor 1010 or by hardware, or by a combination of hardware and software. As a non-limiting example, the exemplary embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this document are not necessarily all referring to the same embodiment.

Additionally, this document may refer to "determining" various pieces of information. Determining the information can include one or more of, for example, estimating the information, calculating the information, predicting the information, or retrieving the information from memory.

Further, this document may refer to "accessing" various pieces of information. Accessing the information can include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this document may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding description has described a number of embodiments. These embodiments include the following optional features alone or in any combination, across various different claim categories and types:

- Using prediction directions during intra prediction in encoding and decoding beyond - 135 degrees and 45 degrees
- extending the prediction directions in a horizontal or vertical direction while removing some directions in the opposite direction to maintain the same number of total directions
- extending the number of directions both beyond -135 degrees and beyond 45 degrees
- signaling from an encoder to a decoder which prediction directions are being used
- using a subset of prediction directions
- the block is a CU having a rectangular shape
- the other block is a neighboring block
- A bitstream or signal that includes one or more of the described syntax elements, or variations thereof.
- Inserting in the signaling syntax elements that enable the decoder to process a bitstream in an inverse manner as to that performed by an encoder.
- Creating and/or transmitting and/or receiving and/or decoding a bitstream or signal that includes one or more of the described syntax elements, or variations thereof.
- A TV, set-top box, cell phone, tablet, or other electronic device that performs any of the embodiments described.
- A TV, set-top box, cell phone, tablet, or other electronic device that performs any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs any of the embodiments described.
- A TV, set-top box, cell phone, tablet, or other electronic device that receives (e.g. using an antenna) a signal that includes an encoded image, and performs any of the embodiments described.
- Various other generalized, as well as particularized, features are also supported and contemplated throughout this disclosure.

**Claims**

1. A method, comprising:

   predicting a video sample belonging to a rectangular block based on at least one sample of a neighboring block lying along a direction based on block shape of the rectangular block; and,
   encoding the rectangular block using intra prediction based on the predicted video sample.

2. An apparatus for encoding a video block, comprising:

   a memory, and
   a processor, configured to:

      predict a video sample belonging to a rectangular block based on at least one sample of a neighboring block lying along a direction based on block shape of the rectangular block; and,
      encode the rectangular block using intra prediction based on the predicted video sample.

3. A method, comprising:

   predicting a video sample belonging to a rectangular block based on at least one sample of a neighboring reconstructed block lying along a direction based on block shape of the rectangular block; and,
   decoding the rectangular block using intra prediction based on the predicted video sample.

4. An apparatus for decoding a video block, comprising:

   a memory, and
   a processor, configured to:

      predict a video sample belonging to a rectangular block based on at least one sample of a neighboring reconstructed block lying along a direction based on block shape of the rectangular block; and,

decode the rectangular block using intra prediction based on the predicted video sample.

5. The method of Claim 1 or 3, or the apparatus of Claim 2 or 4, wherein there are more prediction samples of neighboring blocks along the longer edge of said rectangular block.

6. The method of Claim 1 or 3, or the apparatus of Claim 2 or 4, wherein directions are added along the longer side of said rectangular block and directions are removed along the shorter side of said rectangular block.

7. The method of Claim 1 or 3, or the apparatus of Claim 2 or 4, wherein prediction modes are signalled using a flag.

8. The method of Claim 1 or 3, or the apparatus of Claim 2 or 4, wherein prediction modes are signalled differently based on whether the mode belongs to a most probable mode list.

9. The method of Claim 1 or 3, or the apparatus of Claim 2 or 4, wherein an index is used to map a prediction mode of the neighboring block to prediction modes of the rectangular block.

10. The method of Claim 1 or 3, or the apparatus of Claim 2 or 4, wherein a rate distortion optimization is performed to find a prediction.

11. The method of Claim 1 or 3, or the apparatus of Claim 2 or 4, wherein prediction directions are added along the longer side of said rectangular block and prediction directions are added along the shorter side of said rectangular block.

12. A device comprising:

an apparatus according to any of claims 4 through 11; and
at least one of (i) an antenna configured to receive a signal, the signal including the video block, (ii) a band limiter configured to limit the received signal to a band of frequencies that includes the video block, and (iii) a display configured to display an output.

13. A non-transitory computer readable medium containing data content generated according to the method of any one of claims 1 and 5 to 11, or by the apparatus of any one of claims 2 and 5 to 12, for playback using a processor.

14. A signal comprising video data generated according to the method of any one of claims 1 and 5 to 11, or by the apparatus of any one of claims 2 and 5 to 12, for playback using a processor.

15. A computer program product comprising instructions which, when the program is executed by a computer, cause the computer to carry out the method of any one of claim 1 or claim 3 and claims 5 to 11.

Figure 1

Figure 2

EP 3 598 757 A1

Figure 3

Figure 4

Figure 5

Figure 6

24

Figure 7

Figure 8

Figure 9a

Figure 9b

**Encoder**

Input target block of width W, Height H

Form top and left reference arrays of length 2W+1 and 2H+1

Search for the best prediction mode with mode 0 = planar, mode 1= DC, and 65 angular modes. The angular modes correspond to directions that depend on the aspect ratio (W/H) of the target block. Predictions for angular modes are computed using the new angle parameter A. The search procedure is the same as in JEM.

Construct the MPM set after mapping the modes of the neighbors to the mode set of the target block. Encode the best prediction mode using this MPM set in the same way as done in JEM

Apply transform coding to the prediction residual and then CABAC encoding of transform coefficients, as in JEM

Output bitstream

**Decoder**

Input bitstream

Construct the MPM set after mapping the modes of the neighbors to the mode set of the target block. Decode the prediction mode using this MPM set in the same way as done in JEM

Decode the transform coefficients of prediction residual using CABAC as in JEM. Apply inverse transform to form the prediction residual as in JEM.

Form top and left reference arrays of length 2W+1 and 2H+1. If the decoded prediction mode is planar or DC, compute the prediction as in JEM. Else compute the prediction using the new angle parameter A. The angular modes correspond to directions that depend on the aspect ratio (W/H) of the target block.

Add prediction residual to the computed prediction

Decoded target block

Figure 10

## Encoder

Input target block of width W, Height H

Form top reference array of length max(H+W+1, 2W+1)
Form left reference array of length max(H+W+1, 2H+1)

↓

Search for the best prediction mode with modes defined as in JEM. Depending on the aspect ratio (W/H), include also the new directions, which are opposite to certain modes, in the mode search. Predictions for those angular modes are computed using the new angle parameter A.

↓

Construct the MPM set in the same manner as in JEM and encode the best prediction mode. If the best prediction mode has an opposite direction, encode the modeFlag value.

↓

Apply transform coding to the prediction residual and then CABAC encoding of transform coefficients, as in JEM

↓

Output bitstream

## Decoder

Input bitstream

Construct the MPM set in the same manner as in JEM and decode the prediction mode. Depending on the aspect ratio (W/H), if the prediction mode has an opposite direction, decode the modeFlag value as well.

↓

Decode the transform coefficients of prediction residual using CABAC as in JEM. Apply inverse transform to form the prediction residual as in JEM.

↓

Form top reference array of length max(H+W+1,2W+1). Form left reference array of length max(H+W+1,2H+1). If the decoded prediction mode is planar or DC, compute the prediction as in JEM. Else, if modeFlag has not been decoded, or the modeFlag has been decoded and its value is 0, then compute the prediction as in JEM. Else, compute the prediction in the new direction opposite to the decoded mode with the new angle parameter A.

↓

Add prediction residual to the computed prediction

↓

Decoded target block

## Figure 11

Figure 12

Figure 13

Figure 14

EP 3 598 757 A1

1500

```
              ┌─────────────────────┐
              │        Start        │  1501
              └─────────────────────┘
                         │
                         ▼
        ┌───────────────────────────────────┐
        │   Predicting video sample from    │
        │  neighbor block along a direction │  1510
        │        based on block shape       │
        └───────────────────────────────────┘
                         │
                         ▼
        ┌───────────────────────────────────┐
        │  Encoding a current block containing │
        │    the video sample using based on   │  1520
        │         predicted video sample       │
        └───────────────────────────────────┘
```

Figure 15

EP 3 598 757 A1

1600

Start    1601

Predicting video sample from
neighbor reconstructed block along a    1610
direction based on block shape

Decoding a current block containing
the video sample using based on    1620
predicted video sample

Figure 16

EP 3 598 757 A1

1700

```
            ┌─────────────────────────────────┐
            │                                 │
            │           Processor             │─────────────▶
            │                                 │
            └─────────────────────────────────┘   1710
                            ▲
                            │
                            ▼
            ┌─────────────────────────────────┐
            │                                 │
            │            Memory               │   1720
            │                                 │
            └─────────────────────────────────┘
                            │
                            ▼
```

Figure 17

Europäisches
Patentamt

European
Patent Office

Office européen
des brevets

## EUROPEAN SEARCH REPORT

Application Number

EP 18 30 5963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO, FILIPPOV, RACAPÉ: "Wide-angle intra prediction for non-square blocks", LJUBLJANA, SI, 11TH MEETING: JOINT VIDEO EXPERTS TEAM (JVET) OF ITU-T SG 16 WP 3 AND ISO/IEC JTC 1/SC 29/WG 11, 15 July 2018 (2018-07-15), XP055533048, * the whole document * | 1-15 | INV. H04N19/593 H04N19/105 H04N19/159 H04N19/176 |
| X | SJÖBERG R ET AL: "Description of SDR and HDR video coding technology proposal by Ericsson and Nokia", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/, no. JVET-J0012-v2, 13 April 2018 (2018-04-13), XP030151169, | 1-4, 12-15 | |
| A | * page 5 - page 7 * | 5-11 | |
| X | SHANSHE WANG ET AL: "Overview of the Second Generation AVS Video Coding Standard (AVS2)", ZTE COMMUNICATIONS, vol. 14, no. 2, 2 February 2016 (2016-02-02), pages 3-11, XP055382539, CN ISSN: 1673-5188 | 1-4, 12-15 | TECHNICAL FIELDS SEARCHED (IPC) H04N |
| A | * the whole document * | 5-11 | |

-/--

The present search report has been drawn up for all claims

| Place of search | Date of completion of the search | Examiner |
|---|---|---|
| Munich | 12 December 2018 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 30 5963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHOHEI MATSUO ET AL: "Modification of intra angular prediction in HEVC", SIGNAL&INFORMATION PROCESSING ASSOCIATION ANNUAL SUMMIT AND CONFERENCE (APSIPA ASC), 2012 ASIA-PACIFIC, IEEE, 3 December 2012 (2012-12-03), pages 1-4, XP032309871, ISBN: 978-1-4673-4863-8 * the whole document * | 1-15 | |

-----

TECHNICAL FIELDS
SEARCHED        (IPC)

The present search report has been drawn up for all claims

| Place of search | Date of completion of the search | Examiner |
|---|---|---|
| Munich | 12 December 2018 | Cyranka, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................
& : member of the same patent family, corresponding
    document

EPO FORM 1503 03.82 (P04C01)

page 2 of 2